# EUROPÄISCHE PATENTANMELDUNG

(11) **EP 1 350 971 A2**
(43) Veröffentlichungstag der Anmeldung: **08.10.2003**
(21) Anmeldenummer: 02023924.0
(22) Anmeldetag: 25.10.2002
(51) Int. Cl.: F16C 23/04

(54) **Lageranordnung**

(30) Priorität: 06.04.2002 DE 10215221
(71) Anmelder: Carl Freudenberg KG, 69469 Weinheim (DE)
(72) Erfinder: Schütz, Michael, 79418 Schliengen (DE)

(57) **Zusammenfassung**

Lageranordnung, umfassend ein Kugelgelenk (1) mit einem ringförmigen Kugelkörper (2) und einem kongruent gestalteten, pfannenförmigen Führungsring (3) zur Aufnahme des Kugelkörpers (2), wobei das Kugelgelenk (1) in radialer Richtung einerseits mit einem elastisch nachgiebigen, ringförmigen Federkörper (4) aus elastomerem Werkstoff verbunden ist und in radialer Richtung andererseits mit einem Lager (5), wobei der Federkörper (4) auf der dem Kugelgelenk (1) radial abgewandten Seite mit einem Gehäuse (6) verbunden ist, wobei das Lager (5) relativ zum Gehäuse (6) kardanisch auslenkbar ist und wobei die einander zugewandten Oberflächen (7, 8) von Kugelgelenk (1) und Gehäuse (6) während der bestimmungsgemäßen Verwendung der Lageranordnung stets ohne relative kardanische Auslenkung zueinander angeordnet sind.

## Beschreibung

### Stand der Technik

Lageranordnungen sind allgemein bekannt und gelangen beispielsweise zur Lagerung von Wellen zur Anwendung. Vorbekannte Lageranordnungen umfassen z.B. ein als Wälz- oder Gleitlager ausgebildetes Lager, das mittels eines Federkörpers aus elastomerem Werkstoff unmittelbar mit einem das Lager radial außenumfangsseitig umschließenden Gehäuse verbunden ist. Derartige Lageranordnungen weisen nur dann zufriedenstellende Gebrauchseigenschaften während einer ausreichend langen Gebrauchsdauer auf, wenn sichergestellt ist, dass die Anbindungsflächen des Federkörpers an die radial innen und außen angrenzenden Maschinenelemente nicht relativ zueinander kardanisch ausgelenkt werden. Die abzustützende Welle, das Lager sowie das Gehäuse müssen daher während der bestimmungsgemäßen Verwendung der Lageranordnung stets achsparallel zueinander angeordnet sein.

Sobald die Welle, bezogen auf den Federkörper, kardanisch ausgelenkt wird, ist der Federkörper, entlang seines Umfangs betrachtet, unterschiedlich großen Zug- und Druckspannungen ausgesetzt, was im Hinblick auf gleichbleibend gute Gebrauchseigenschaften während einer langen Gebrauchsdauer von Nachteil ist. Der Federkörper wird beschädigt und/oder zerstört.

### Darstellung der Erfindung

Der Erfindung liegt die Aufgabe zugrunde, eine Lageranordnung der eingangs genannten Art derart weiterzuentwickeln, dass diese gleichbleibend gute Gebrauchseigenschaften während einer langen Gebrauchsdauer auch dann aufweist, wenn die Welle, bezogen auf den Federkörper, kardanisch ausgelenkt wird. In einem solchen Betriebszustand sollen unerwünschte Spannungen innerhalb des Federkörpers vermieden werden.

Eine solche Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Lageranordnung vorgesehen, umfassend ein Kugelgelenk mit einem ringförmigen Kugelkörper und einem kongruent gestalteten, pfannenförmigen Führungsring zur Aufnahme des Kugelkörpers, wobei das Kugelgelenk in radialer Richtung einerseits mit einem elastisch nachgiebigen, ringförmigen Federkörper aus elastomerem Werkstoff verbunden ist und in radialer Richtung andererseits mit einem Lager, wobei der Federkörper auf der dem Kugelgelenk radial abgewandten Seite mit einem Gehäuse verbunden ist, wobei das Lager relativ zum Gehäuse kardanisch auslenkbar ist und wobei die einander zugewandten Oberflächen von Kugelgelenk und Gehäuse während der bestimmungsgemäßen Verwendung der Lageranordnung stets ohne relative kardanische Auslenkung zueinander angeordnet sind. Von entscheidender Wichtigkeit ist, dass der Federkörper stets frei von kardanischen Beanspruchungen ist, auch dann, wenn die zu lagernde Welle und dadurch das die Welle umschließende Lager, bezogen auf das Gehäuse, kardanisch ausgelenkt werden. Unerwünscht hohe örtliche Zugspannungen innerhalb des Federkörpers, die zu einer Beschädigung/Zerstörung führen können, werden dadurch zuverlässig vermieden. Die einander radial gegenüberliegenden Anbindungsflächen des Federkörpers sind während der bestimmungsgemäßen Verwendung der Lageranordnung stets ohne relative kardanische Auslenkung zueinander angeordnet. Von besonderem Vorteil ist die zuvor beschriebene Lageranordnung dann, wenn der Federkörper, im Längsschnitt der Lageranordnung betrachtet, als Falte mit im Wesentlichen C-förmiger Gestalt ausgebildet ist. Derartige Falten reagieren besonders empfindlich auf Zugspannungen. Der Federkörper ist radial und/oder axial elastisch nachgiebig und als Lager kann, abhängig vom jeweiligen Anwendungsfall, ein Wälz- oder Gleitlager zur Anwendung gelangen.

Nach einer ersten Ausgestaltung kann es vorgesehen sein, dass der Federkörper mit den einander zugewandten Oberflächen von Kugelgelenk und Gehäuse unmittelbar anliegend verbunden ist. Hierbei ist von Vorteil, dass die Lageranordnung einen einfachen und teilearmen Aufbau aufweist und daher kostengünstig herstellbar ist.

Der Federkörper kann mit den Oberflächen adhäsiv verbunden sein. Die stoffschlüssige Verbindung kann beispielsweise durch eine Verklebung oder durch Vulkanisation der Bauteile erfolgen.

Nach einer anderen Ausgestaltung kann der Federkörper zumindest auf der dem Kugelgelenk zugewandten Seite mit einer Hülse verbunden sein, die das Kugelgelenk unmittelbar anliegend umschließt. Die Hülse und das radial benachbart angrenzende Bauteil des Kugelgelenks können kraftschlüssig, beispielsweise durch Aufschrumpfen, miteinander verbunden sein. Im Gegensatz zur Ausgestaltung, bei der der Federkörper die einander zugewandten Oberflächen von Kugelgelenk und Gehäuse unmittelbar anliegend berührt, ist von Vorteil, dass der Federkörper mit der Hülse unabhängig vom Kugelgelenk oder der Einheit, umfassend das Kugelgelenk und das Lager, austauschbar ist. Ist beispielsweise der Federkörper oder das Kugelgelenk defekt, kann das defekte Bauteil unabhängig vom Kugelgelenk oder dem Federkörper ausgetauscht werden. Im Hinblick auf die Minimierung von Betriebskosten während der Verwendung der Lageranordnung ist das von hervorzuhebendem Vorteil.

Der Kugelkörper kann einen Bestandteil des Lagers bilden. In einem solchen Fall ist die dem Federkörper radial zugewandte Seite des Lagers mit einer - im Längsschnitt der Lageranordnung betrachtet - im Wesentlichen halbkugelförmigen Oberfläche versehen, die im Führungsring aufgenommen ist. Dem vergleichsweise komplizierter gestalteten Lager steht der Vorteil eines teilearmen Aufbaus der gesamten Lageranordnung gegenüber. Als Lager kann ein Wälzlager oder ein Gleitlager zur Anwendung gelangen.

Der Führungsring kann, im Längsschnitt der Dichtungsanordnung betrachtet, zweiteilig ausgebildet sein und zwei Halbschalen umfassen, wobei die Halbschalen einander mit axialem Abstand benachbart zugeordnet sind. Der durch den Abstand gebildete Spalt kann als Schmiermittelnut zur Schmierung der Kontaktflächen von Kugelkörper und Führungsring ausgebildet sein. Die Schmiermittelnut kann beispielsweise mit einem Schmierfett befüllt sein.

Die Halbschalen können, bezogen auf eine die Lageranordnung axial mittig durchschneidende, gedachte Radialebene, spiegelsymmetrisch ausgebildet sein. Durch die Halbschalen, die als Gleichteile ausgebildet sind, ist die Lageranordnung einfach und kostengünstig herstellbar. Durch die gleichgestalteten Halbschalen sind Montagefehler auf ein Minimum reduziert.

Die zuvor beschriebene Lageranordnung wird bevorzugt als Kardanwellenlager in Kraftfahrzeugen verwendet.

### Kurzbeschreibung der Zeichnung

Drei Ausführungsbeispiele der erfindungsgemäßen Lageranordnung werden nachfolgend anhand der Figuren 1 bis 3 näher beschrieben. Diese zeigen jeweils in schematischer Darstellung:
- Figur 1 a und 1 b: ein erstes Ausführungsbeispiel, bei dem der Federkörper, in radialer Richtung betrachtet, die einander zugewandten Oberflächen von Kugelgelenk und Gehäuse unmittelbar anliegend berührt und mit diesen verbunden ist,
- Figur 2 a und 2 b: ein zweites Ausführungsbeispiel, das sich vom ersten Ausführungsbeispiel aus Figur 1 durch eine Hülse unterscheidet, die in radialer Richtung zwischen dem Führungsring des Kugelgelenks und dem Federkörper angeordnet ist,
- Figur 3 a und 3 b: ein drittes Ausführungsbeispiel, ähnlich dem zweiten Ausführungsbeispiel aus Figur 2, wobei der Kugelkörper durch den Außenring eines Wälzlagers gebildet ist.

### Ausführung der Erfindung

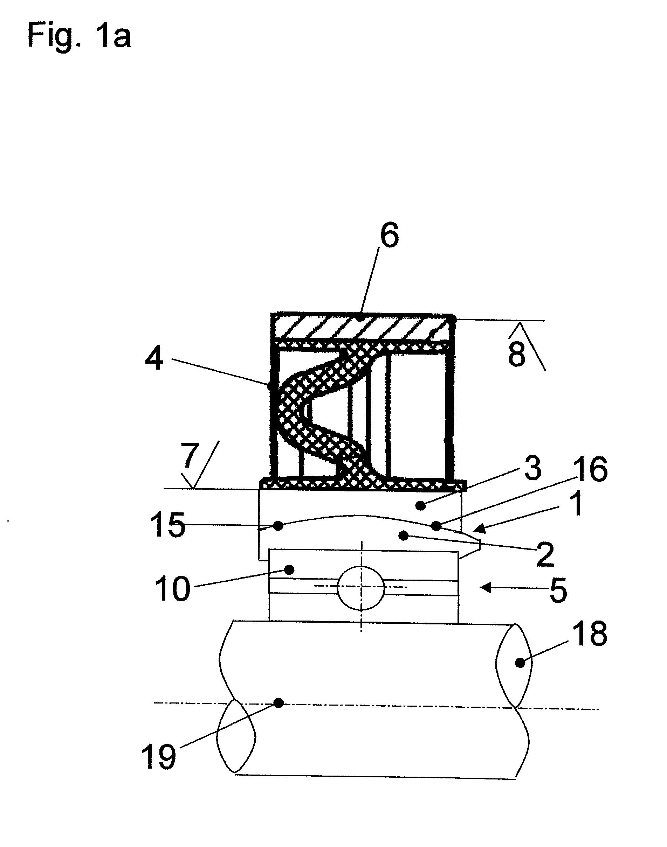

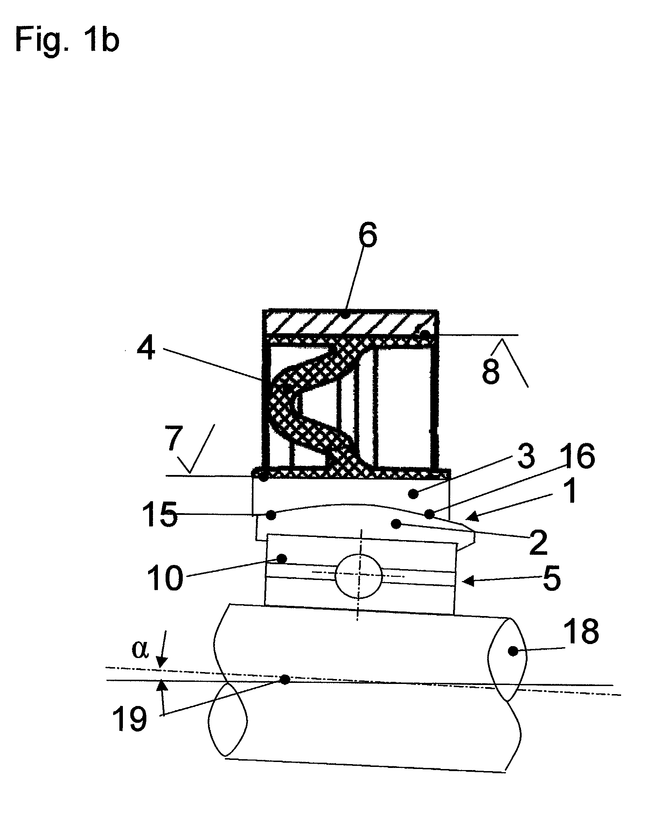

In den Figuren 1 bis 3 ist jeweils eine Lageranordnung gezeigt, die zur Lagerung einer Kardanwelle 18 eines Kraftfahrzeugs verwendet wird. In den Figuren 1 a bis 3 a verläuft die Kardanwelle 18 achsparallel zur Symmetrieachse 19, in den Figuren 1 b bis 3 b ist die Kardanwelle 18 demgegenüber jeweils kardanisch ausgelenkt.

In den Figuren 1 bis 3 ist jeweils eine Lageranordnung gezeigt, die ein Kugelgelenk 1 umfasst, wobei das Kugelgelenk 1 aus einem ringförmigen Kugelkörper 2 und einem kongruent gestalteten, pfannenförmigen Führungsring 3 zur Aufnahme des Kugelkörpers 2 besteht. Der Kugelkörper 2 ist, wie hier im Längsschnitt gezeigt, außenumfangsseitig im Wesentlichen halbkugelförmig ausgebildet. Das Kugelgelenk 1 ist außenumfangsseitig vom Gehäuse 6 mit radialem Abstand umschlossen, wobei in dem durch den Abstand gebildeten Spalt der Federkörper 4 angeordnet ist. Der Federkörper 4 besteht aus einem elastomeren Werkstoff und ist, im Längsschnitt betrachtet, im Wesentlichen faltenförmig ausgebildet, wobei die Falte im Wesentlichen C-förmig gestaltet und in axialer Richtung offen ist. Der hier gezeigte Federkörper 4 ist sowohl in radialer als auch in axialer Richtung elastisch nachgiebig, so dass beispielsweise Wärmedehnungen der Kardanwelle 18 in axialer Richtung der Lageranordnung oder Unwuchten der Lageranordnung in radialer Richtung vom Federkörper 4 aufgenommen werden.

Die Anordnung des Kugelgelenks innerhalb der Lageranordnung ist von entscheidender Wichtigkeit. Wie in den Figuren 1 b bis 3 b gezeigt ist, hat sich die Lage des Führungsrings 3 und des Federkörpers 4 relativ zum Gehäuse 6 nicht verändert, obwohl die Kardanwelle 18, bezogen auf die Darstellungen in den Figuren 1 a bis 3 a, kardanisch ausgelenkt ist. Die einander zugewandten Oberflächen 7, 8 von Kugelgelenk 1 und Gehäuse 6 sind sowohl in den Darstellungen 1 a bis 3 a als auch in den Darstellungen 1 b bis 3 b stets parallel zueinander angeordnet; die einander zugewandten Oberflächen 7, 8 von Kugelgelenk 1 und Gehäuse 6 sind während der bestimmungsgemäßen Verwendung der Lageranordnung stets ohne relative kardanische Auslenkung zueinander angeordnet, ebenso wie die Anbindungsflächen des Federkörpers 4 an den radial angrenzenden Bauteilen. Durch das Kugelgelenk 1 und dessen Anordnung hat die kardanische Auslenkung der Kurbelwelle 18 keinen Einfluss auf die Spannungen innerhalb des Federkörpers 4.

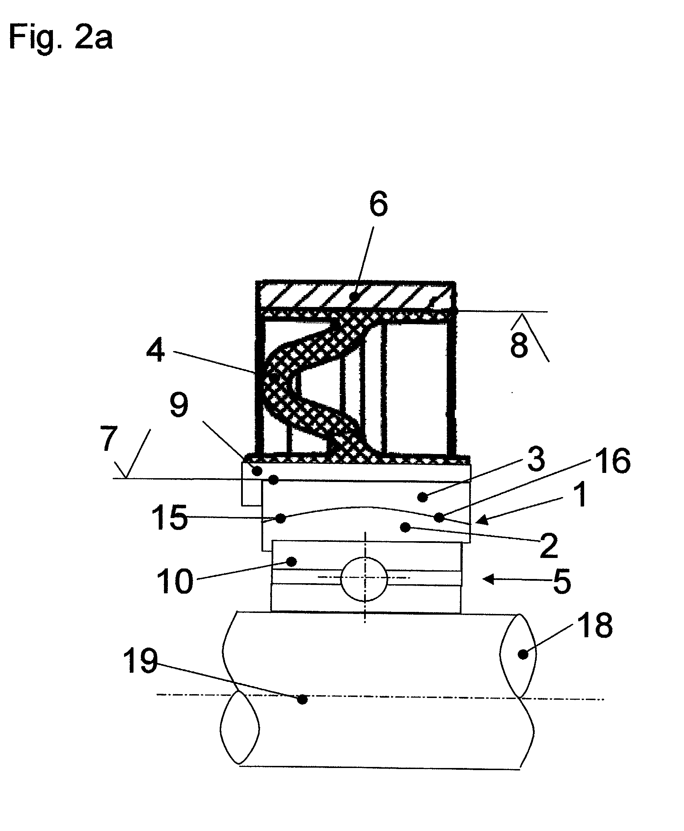

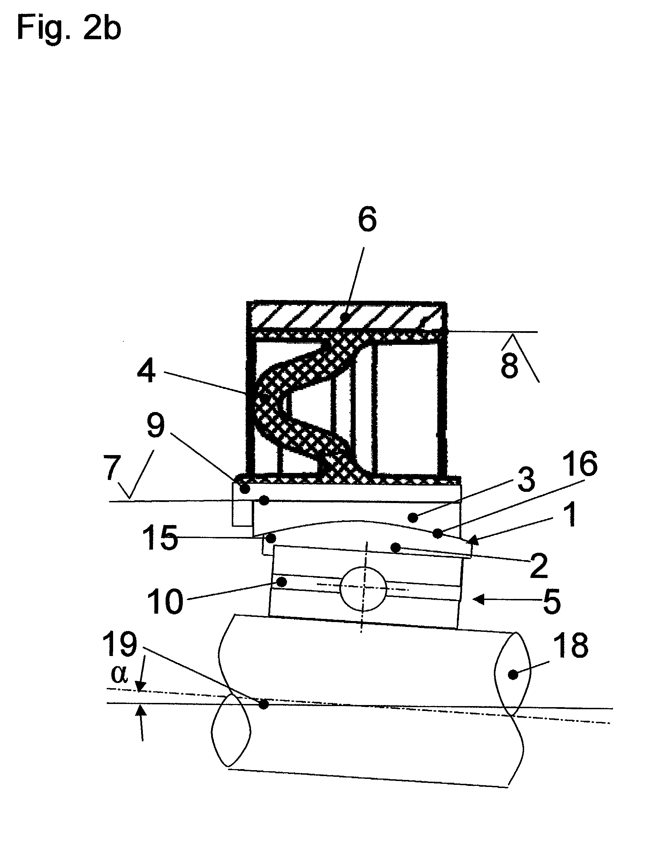

In den Figuren 1 a und 1 b ist ein Ausführungsbeispiel gezeigt, bei dem der Federkörper 4 unmittelbar an die Oberflächen 7, 8 der radial benachbart angrenzenden Teile, in diesem Fall des Kugelgelenks 1 und des Gehäuses 6, anvulkanisiert ist. Das Kugelgelenk 1 ist, wie im Ausführungsbeispiel gemäß Figur 2 auch, zweiteilig ausgebildet und besteht aus dem Kugelkörper 2 und dem Führungsring 3.

Das Ausführungsbeispiel aus Figur 2 unterscheidet sich vom Ausführungsbeispiel aus Figur 1 dadurch, dass der Federkörper 4 radial innenseitig mit einer Hülse 9 verbunden ist, wobei die Hülse 9 das Kugelgelenk 1 radial außenseitig umschließt und mit diesem drehfest verbunden ist. Die Hülse 9 ist bevorzugt zerstörungsfrei lösbar mit dem Kugelgelenk 1 verbunden.

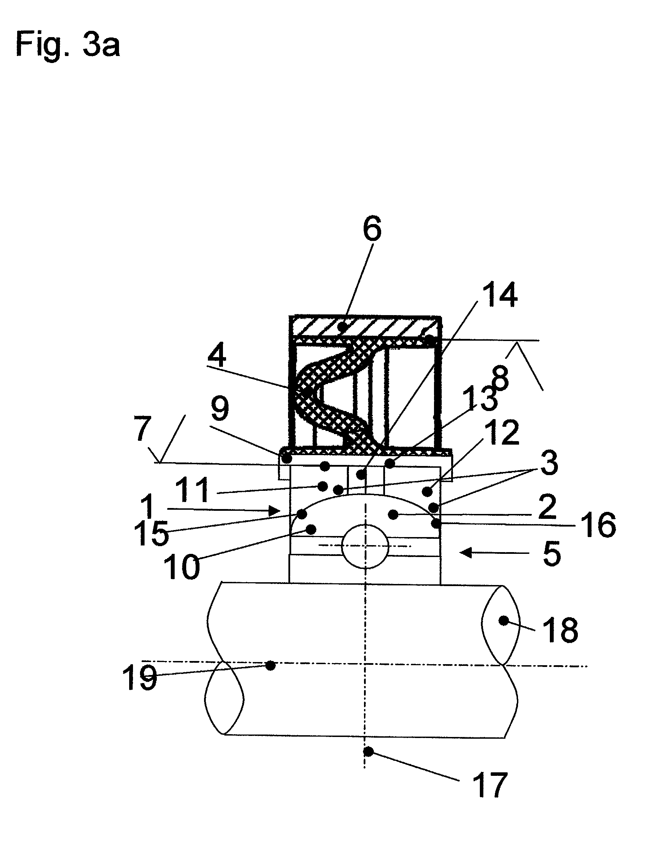

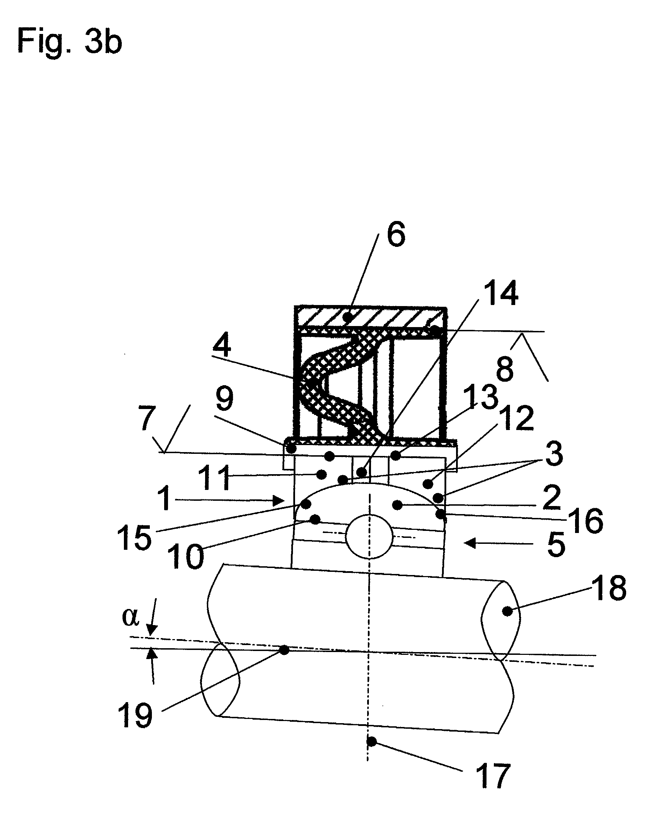

Das Ausführungsbeispiel aus Figur 3 unterscheidet sich von den zuvor beschriebenen Ausführungsbeispielen dadurch, dass der Führungsring 3, im Längsschnitt der Dichtungsanordnung betrachtet, zweiteilig ausgebildet ist und zwei Halbschalen 11, 12 umfasst, wobei die Halbschalen 11, 12 einander mit axialem Abstand benachbart zugeordnet sind. Der durch den Abstand gebildete Spalt 13 ist als Schmiermittelnut 14 zur Schmierung der Kontaktflächen 15, 16 von Kugelkörper 2 und Führungsring 3 ausgebildet. Außerdem sind die Halbschalen 11, 12, bezogen auf die gedachte Radialebene 17, spiegelsymmetrisch ausgebildet. Die dem Federkörper 4 radial zugewandte Oberfläche des Lagers 5 weist die Form des Kugelkörpers 2 auf und ist in der kongruent gestalteten Ausnehmung des Führungsrings 3 angeordnet.

Auch in den Figuren 1 und 2 besteht die Möglichkeit, statt des Kugelkörpers 2 und dem separat erzeugten Ring des Lagers 5 ein entsprechend ausgebildetes einteiliges Bauteil vorzusehen, beispielsweise wie in Figur 3 dargestellt.

Die unerwünschten mechanischen Spannungen im faltenförmig ausgebildeten Federkörper 4 sind durch die Verwendung und Anordnung des Kugelgelenks 1 auf ein Minimum reduziert.

## Patentansprüche

1. Lageranordnung, umfassend ein Kugelgelenk (1) mit einem ringförmigen Kugelkörper (2) und einem kongruent gestalteten, pfannenförmigen Führungsring (3) zur Aufnahme des Kugelkörpers (2), wobei das Kugelgelenk (1) in radialer Richtung einerseits mit einem elastisch nachgiebigen, ringförmigen Federkörper (4) aus elastomerem Werkstoff verbunden ist und in radialer Richtung andererseits mit Lager (5), wobei der Federkörper (4) auf der dem Kugelgelenk (1) radial abgewandten Seite mit einem Gehäuse (6) verbunden ist, wobei das Lager (5) relativ zum Gehäuse (6) kardanisch auslenkbar ist und wobei die einander zugewandten Oberflächen (7, 8) von Kugelgelenk (1) und Gehäuse (6) während der bestimmungsgemäßen Verwendung der Lageranordnung stets ohne relative kardanische Auslenkung zueinander angeordnet sind.

2. Lageranordnung nach Anspruch 1, **dadurch gekennzeichnet, dass** der Federkörper (4) mit den einander zugewandten Oberflächen (7, 8) von Kugelgelenk (1) und Gehäuse (6) unmittelbar anliegend verbunden ist.

3. Lageranordnung nach Anspruch 2, **dadurch gekennzeichnet, dass** der Federkörper (4) mit den Oberflächen (7, 8) adhäsiv verbunden ist.

4. Lageranordnung nach einem der Ansprüche 1 bis 3, **dadurch gekennzeichnet, dass** der Federkörper (4) zumindest auf der dem Kugelgelenk (1) zugewandten Seite mit einer Hülse (9) verbunden ist, die das Kugelgelenk (1) unmittelbar anliegend umschließt.

5. Lageranordnung nach einem der Ansprüche 1 bis 4, **dadurch gekennzeichnet, dass** der Kugelkörper (2) einen Bestandteil des Lagers (5) bildet.

6. Lageranordnung nach Anspruch 5, **dadurch gekennzeichnet, dass** der Kugelkörper (2) durch den Außenring (10) eines Wälzlagers gebildet ist.

7. Lageranordnung nach einem der Ansprüche 1 bis 6, **dadurch gekennzeichnet, dass** der Führungsring (3), im Längsschnitt der Dichtungsanordnung betrachtet, zweiteilig ausgebildet ist und zwei Halbschalen (11, 12) umfasst und dass die Halbschalen (11, 12) einander mit axialem Abstand benachbart zugeordnet sind.

8. Lageranordnung nach Anspruch 7, **dadurch gekennzeichnet, dass** der durch den Abstand gebildete Spalt (13) als Schmiermittelnut (14) zur Schmierung der Kontaktflächen (15, 16) von Kugelkörper (2) und Führungsring (3) ausgebildet ist.

9. Lageranordnung nach einem der Ansprüche 7 oder 8, **dadurch gekennzeichnet, dass** die Halbschalen (11, 12), bezogen auf eine die Lageranordnung axial mittig durchschneidende, gedachte Radialebene (17), spiegelsymmetrisch ausgebildet sind.
